# EUROPEAN PATENT APPLICATION

(11) **EP 2 902 938 A1**
(43) Date of publication of application: **05.08.2015**
(21) Application number: 13841275.4
(22) Date of filing: 29.08.2013
(51) Int. Cl.: G06F 21/56

(54) **SIGNATURE VERIFICATION DEVICE, SIGNATURE VERIFICATION METHOD, AND PROGRAM**

(30) Priority: 25.09.2012 JP 2012211291
(71) Applicant: Mitsubishi Electric Corporation, Tokyo 100-8310 (JP)
(72) Inventor: KAWAUCHI, Kiyoto, Tokyo 100-8310 (JP)
(74) Representative: Pfenning, Meinig & Partner GbR
(86) International application number: PCT/JP2013/073198
(87) International publication number: WO 2014/050424

(57) **Abstract**

Whether or not there is an attack that cannot be detected using signature information is determined without performing an enormous number of verifications. A signature detection not-applicable data pattern extracting part 105 analyzes signature information 102 and extracts a pattern of data which is not detected using the signature information 102. An attack data pattern extracting part 107 analyzes a target program to which the signature information 102 is to be applied, and extracts a pattern of attack data that attacks the target program. A pattern comparing part 108 compares a signature detection not-applicable data pattern extracted by the signature detection not-applicable data pattern extracting part 105 with an attack data pattern extracted by the attack data pattern extracting part 107, and extracts an attack data pattern coinciding with the signature detection not-applicable data pattern, as an attack data pattern not detected using the signature information 102.

## Description

### Technical Field

The present invention relates to a technique for verifying signature information (to be also merely referred to as signature hereinafter).

The signature information is information that describes the features of commands and data which serve for making an attack.

### Background Art

As a technique for verifying the signature of an intrusion detection system (IDS), for example, a method is known which actually executes a program that makes an attack, and checks whether the attack can be detected in communication being transmitted from the program, as in Patent Literature 1.

### Citation List

### Patent Literature

Patent Literature 1: JP 2007-242002

### Non-Patent Literature

Non-Patent Literature 1: Brumley D. et al, Automatic patch-based exploit generation is possible: Techniques and implications. In: Proc of the 2008 IEEE Symposium on Security and Privacy (2008)

### Summary of Invention

### Technical Problem

The IDS compares pattern information called signature with a traffic flowing in a monitoring target network, and if a traffic that matches the pattern flows in the network, considers the traffic an attack.

The signature is defined for each attack being a detection target.

If a communication that matches the signature occurs, it is considered an occurrence of an attack which is the detection target of the signature, and the network administrator is informed of the attack.

Generally, every time a new attack is found, the developer of the IDS creates a signature, and the signature is distributed periodically or as needed to the user of the system.

Information is not open to the public as to whether or not the signature can detect all attacks which are the detection targets of the signature.

When the user verifies the signature, the user needs to actually obtain an attack tool to generate an attack traffic, and input the attack traffic to the IDS to determine whether or not the attack traffic can be detected.

Unless the traffic generated by the employed attack tool covers all attack patterns, if there is a possibility of detection failure by the signature, the user cannot recognize it.

For a program vulnerability that an attack may take advantage of, for example, a technique described in Non-Patent Literature 1 is known as a method of comparing an after-correction program and a before-correction program and producing data which attacks the vulnerability using an instruction added or altered in the after-correction program.

Even with such a technique, whether the signature can actually detect all attack data generated can only be determined by testing the signature with the IDS using the actually generated data. This leads to a problem that if the attack data has an enormous number of variations, the test will never end.

The present invention has as one of its major objects to solve the problem as described above, and mainly aims at determining whether or not there is an attack that cannot be detected using signature information.

### Solution to Problem

A signature verification device according to the present invention includes:
a signature detection not-applicable data pattern extracting part that analyzes signature information and extracts a pattern of data which is not detected using the signature information;
an attack data pattern extracting part that analyzes a target program to which the signature information is to be applied, and extracts a pattern of attack data that attacks the target program; and
a pattern comparing part that compares a signature detection not-applicable data pattern extracted by the signature detection not-applicable data pattern extracting part with an attack data pattern extracted by the attack data pattern extracting part, and extracts an attack data pattern coinciding with the signature detection not-applicable data pattern, as an attack data pattern not detected using the signature information.

### Advantageous Effects of Invention

According to the present invention, an attack data pattern that is not detected using signature information is extracted based on an analysis result on the signature information and an analysis result on a target program to which the signature information is to be applied. Hence, whether or not there is an attack that cannot be detected using the signature information can be determined without performing an enormous number of verifications.

### Brief Description of Drawings

Fig. 1 illustrates a configuration example of a signature verification device according to Embodiment 1.
Fig. 2 is a flowchart illustrating an operation example of a signature detection not-applicable data pattern extracting part according to Embodiment 1.
Fig. 3 illustrates an extraction example of a signature detection not-applicable data pattern according to Embodiment 1.
Fig. 4 is a flowchart illustrating an operation example of an attack data pattern extracting part according to Embodiment 1.
Fig. 5 illustrates an example of a conversion table for obtaining a regular expression according to Embodiment 1.
Fig. 6 is a flowchart illustrating an operation example of a pattern comparing part according to Embodiment 1.
Fig. 7 is a flowchart illustrating an operation example of a comparison result output part according to Embodiment 1.
Fig. 8 illustrates a configuration example of a signature verification device according to Embodiment 2.
Fig. 9 is a flowchart illustrating an operation example of a comparison result verification part according to Embodiment 2.
Fig. 10 is a flowchart illustrating a "character string production" procedure according to Embodiment 2.
Fig. 11 illustrates a hardware configuration example of the signature verification example according to Embodiment 1 or 2.

### Description of Embodiments

### Embodiment 1.

This embodiment will explain an example in which the pattern of attack data and a signature are directly compared with each other so that whether or not a detection failure with a signature exists can be recognized without performing an enormous number of verifications.

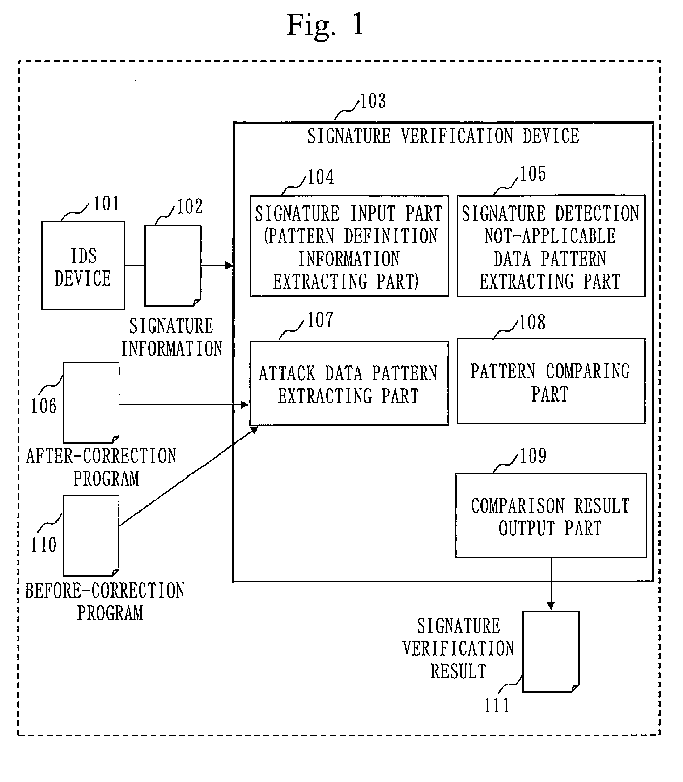

Fig. 1 illustrates a configuration example of a signature verification device 103 according to this embodiment.

The signature verification device 103 receives signature information 102 extracted from an IDS device 101, and a before-correction program 110 and an after-correction program 106.

Also, the signature verification device 103 outputs a signature verification result 111 indicating whether or not a detection pattern described in the signature information 102 can thoroughly detect a vulnerability attack being a detection target.

The before-correction program 110 is a program that the vulnerability attack, being a detection target of the signature information 102, is to attack, and is a program before its vulnerability is corrected.

The after-correction program 106 is a program formed by correcting the vulnerability of the before-correction program 110.

This embodiment discloses a method of extracting the signature information 102 from the IDS device 101. This embodiment may also have a configuration in which the signature information 102 is downloaded directly from, for example, the website of the IDS developer.

In this embodiment, the signature verification device 103 takes as input, the before-correction program 110 and the after-correction program 106. Alternatively, the signature verification device 103 may take as input, for example, a before-correction program and differential information (so-called patch) for correction.

Where the programs can be downloaded from the Internet readily, if the signature verification device 103 downloads programs from the Internet regularly, before-correction programs and after-correction programs may be obtained automatically at arbitrary time points.

The signature verification device 103 is constituted by a signature input part 104, a signature detection not-applicable data pattern extracting part 105, an attack data pattern extracting part 107, a pattern comparing part 108, and a comparison result output part 109.

The signature input part 104 fetches the signature information 102 into the signature verification device 103 and extracts pattern definition information on detection target data, the pattern definition information being defined in the signature information 102.

In other words, the signature input part 104 extracts, from the signature information 102, the pattern definition information which defines the pattern of the data being detection target of the signature information 102.

The signature input part 104 is an example of a pattern definition information extracting part.

The signature detection not-applicable data pattern extracting part 105 takes as input, the pattern definition information extracted by the signature input part 104, and extracts a pattern (signature detection not-applicable data pattern) that matches all data which are not detected using the pattern definition information.

In other words, the signature detection not-applicable data pattern extracting part 105 analyzes the pattern definition information extracted from the signature information 102, and extracts the pattern of data not detected using the pattern definition information, as a signature detection not-applicable data pattern.

The attack data pattern extracting part 107 takes as input, the before-correction program 110 and the after-correction program 106, and produces the pattern (attack data pattern) of attack data that can attack the vulnerability, based on the contents of correction made on the program in order to cope with the vulnerability.

In other words, the attack data pattern extracting part 107 analyzes the target program (the before-correction program 110 and the after-correction program 106) to which the signature information 102 is applied, and extracts the pattern of the attack data that attacks the target program, as the attack data pattern.

The pattern comparing part 108 compares the signature detection not-applicable data pattern extracted by the signature detection not-applicable data pattern extracting part 105 with the attack data pattern extracted by the attack data pattern extracting part 107.

Then, the pattern comparing part 108 extracts the pattern of the attack data that cannot be detected using the detection pattern defined by the signature information 102.

In other words, the pattern comparing part 108 extracts the attack data pattern coinciding with the signature detection not-applicable data pattern, as the attack data pattern not detected using the signature information 102.

The comparison result output part 109 determines whether or not the pattern of the attack data extracted by the pattern comparing part 108 is empty, and outputs the result as the signature verification result 111.

The operations of the respective elements of the signature verification device 103 will be described.

First, the operation of the signature input part 104 will be described.

As mentioned earlier, the signature input part 104 extracts the pattern definition information of the data to be detected, from the inputted signature information 102.

The pattern definition information is generally expressed in regular expression.

The type and format of information included in the signature information 102 may differ according to the IDS device. No matter what the IDS may be, its signature information includes the pattern definition information of the data to be detected.

Hence, it is easy to construct the signature input part 104 according to the format of the signature information to be analyzed, and accordingly the configuration of the signature input part 104 will not be described in detail.

The operation of the signature detection not-applicable data pattern extracting part 105 will be described.

As mentioned earlier, the signature detection not-applicable data pattern extracting part 105 takes as input, the pattern definition information extracted by the signature input part 104, and produces the pattern (signature detection not-applicable data pattern) that matches all data not detected using the pattern defined by the pattern definition information.

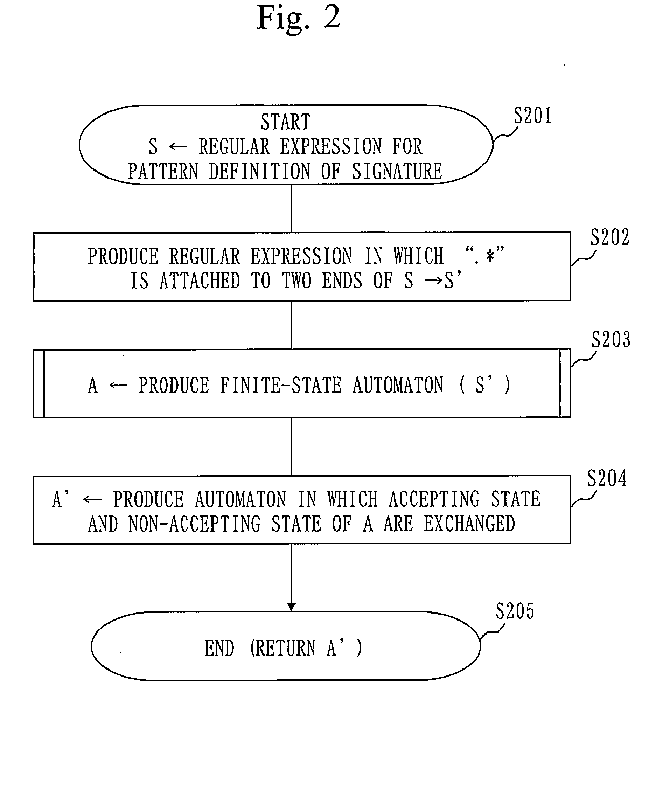

Fig. 2 is a flowchart illustrating an operation example of the signature detection not-applicable data pattern extracting part 105.

The signature detection not-applicable data pattern extracting part 105 receives as input, a regular expression representing the pattern definition information of the signature information 102, and stores the received regular expression in a variable S (S201).

Then, in S202, the signature detection not-applicable data pattern extracting part 105 produces a new regular expression S' in which ".*" being a regular expression for acceptance of an arbitrary character string is attached to each of the two ends of S.

After that, in S203, the signature detection not-applicable data pattern extracting part 105 produces, out from the regular expression S', a finite-state automaton (to be shortened as automaton hereinafter) which can accept only data that matches this regular expression, and stores the produced automaton in a variable A.

A method for forming a finite-state automaton which can accept only data that matches a given regular expression is widely known and is explained in detail in, for example, Reference Literature 1.

### Reference Literature 1: NATATA, Ikuo, Compiler no Kousei to Saitekika (Construction and Optimization of Compiler), ISBN978-4-254-12139-1

Then, in S204, the signature detection not-applicable data pattern extracting part 105 produces (A') a new automaton by interchanging the accepting state and non-accepting state of the automaton stored in the variable A, and outputs the new automaton. The process of the signature detection not-applicable data pattern extracting part 105 thus ends.

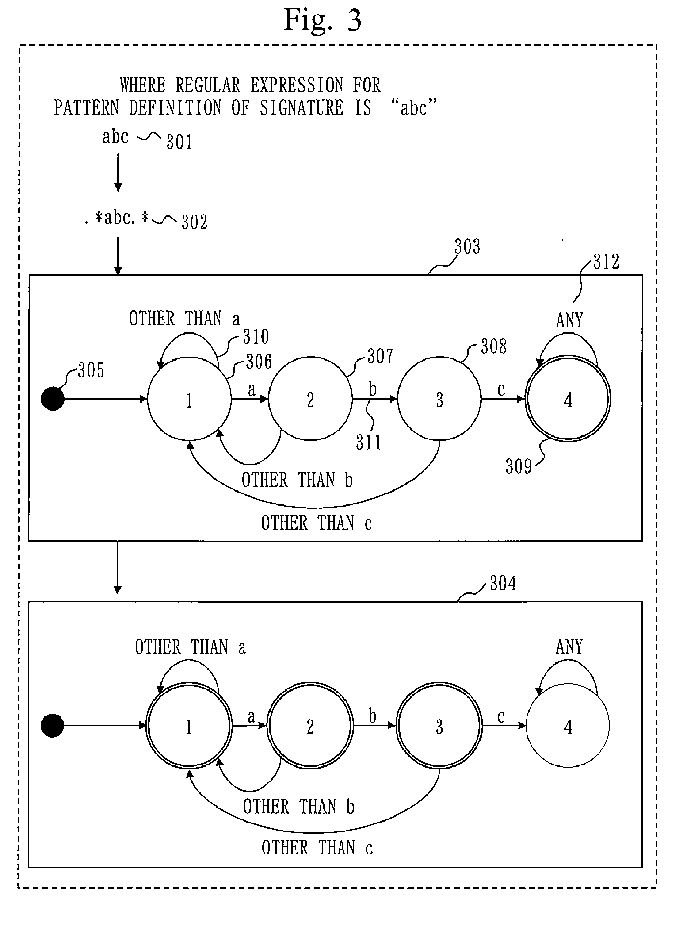

Fig. 3 illustrates how the pattern definition information of the inputted signature information 102 is processed.

In Fig. 3, assume that a regular expression (which matches only a character string "abc") indicated by reference numeral 301 is given as input.

A regular expression for reference numeral 302 is produced from the regular expression for reference numeral 301, which is produced in S202 described before. Then, an automaton 303 is produced in S203.

Representation of the automaton 303 will be briefly explained.

A circle denoted by each of reference numerals 306 to 309 indicates a corresponding "state" of the automaton, and the number in the circle is the identifier of the corresponding state.

Arrows that connect states indicate state transition.

For example, an arrow indicated by reference numeral 311 indicates a transition to state 3 (308) in a case where an input character "b" is received at a time point of state 2 (307).

As indicated by reference numeral 310, sometimes the transition source and the transition destination of state transition may be the same.

State 4 (309) is called accepting state among states. If input ends while the automaton is in state 4, the inputted character string is considered having been accepted by the automaton.

Other states are non-accepting states. If input ends in one of such states, the input is considered not having been accepted by the automaton.

Finally, a black circle 305 represents that state 1 is the initial state of the automaton.

After producing the automaton 303, finally in S204, the signature detection not-applicable data pattern extracting part 105 produces a new automaton 304 in which the accepting state and non-accepting state of the automaton are interchanged, and outputs the automaton 304 as a processing result.

The operation of the attack data pattern extracting part 107 will be described.

As mentioned earlier, the attack data pattern extracting part 107 takes as input, the before-correction program 110 and the after-correction program 106, and produces the pattern of the attack data that can attack the vulnerability, from the contents of correction made on the program in order to cope with the vulnerability.

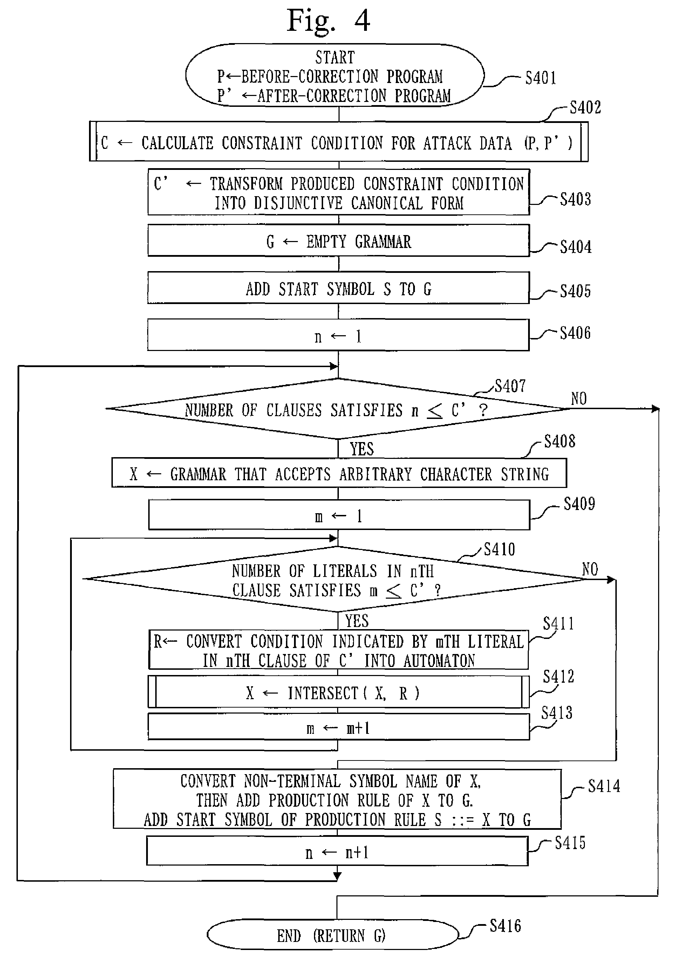

Fig. 4 is a flowchart illustrating an operation example of the attack data pattern extracting part 107.

As indicated in S401, the attack data pattern extracting part 107 is called upon input of the before-correction program 110 and the after-correction program 106, and stores the before-correction program 110 and the after-correction program 106 in variables P and P' respectively.

Then, in S402, the attack data pattern extracting part 107 calculates the constraint condition concerning data that attacks the vulnerability, and substitutes the calculated constraint condition for a variable C.

The constraint condition can be calculated by comparing P and P', extracting an input data inspection process which is added as a countermeasure for the vulnerability, and combining the inspecting condition of (existing) input data inspection which is conducted since input of data until the input data inspection process is reached, and the inspecting condition of newly added input data inspection, as explained in, for example, Non-Patent Literature 1.

For example, the constraint condition produced in S402 is:
(input character string length < 100) ∨ (100 ≤ input character string length ∧ input character string includes "mode = LONG")

Then, in S403, the attack data pattern extracting part 107 transforms the produced constraint condition into a disjunctive canonical form, and stores the transformed constraint condition in a variable C'.

The disjunctive canonical form expresses a logical formula in the form of a disjunction of conjunctive clauses. An arbitrary logical formula can be transformed into the disjunctive canonical form.

Then, from S404 through S416, the attack data pattern extracting part 107 produces a "grammar" for a character string that satisfies this condition (the constraint condition as transformed into the disjunctive canonical form), from C'.

The grammar is expressed as a context-free grammar.

The context-free grammar is a grammar in which each of all the left-hand sides of all production rules is constituted by only one non-terminal symbol.

First, in S404, the attack data pattern extracting part 107 produces an empty grammar containing no production rule. In S405, a start symbol S is given to the empty grammar, thus initializing a grammar G being a final output.

Then, in the loop of S407 through S415, the attack data pattern extracting part 107 produces a (partial) grammar that satisfies a constraint condition corresponding to each conjunctive clause in the constraint condition C'.

First, in S408, the attack data pattern extracting part 107 initializes a variable X by a grammar that accepts an arbitrary character string.

As a grammar satisfying such a condition, for example, the following grammar can be given (where ε is a symbol representing emptiness).
X :: = ε
X :: = one arbitrary character X

Then, in the loop of S410 through S413, the attack data pattern extracting part 107 produces a grammar rule that satisfies all constraint conditions included in the nth disjunctive clause.

First, in S411, the attack data pattern extracting part 107 extracts each literal (atomic formula and its negation) included in the nth disjunctive clause in C', converts the extracted condition into a corresponding automaton, and substitutes the automaton for a variable R.

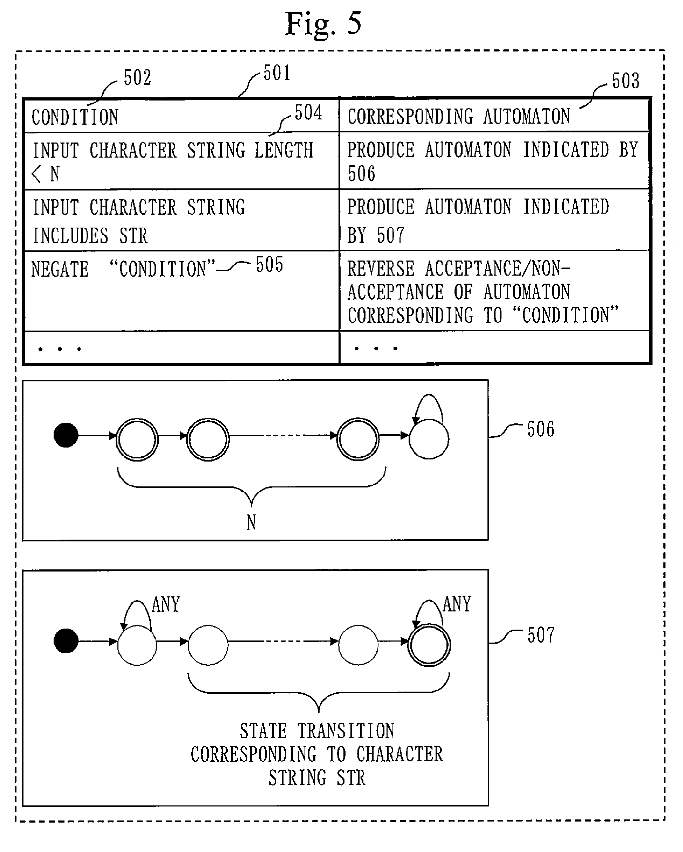

The conversion is carried out using a conversion table as presented in Fig. 5.

The conversion table is a table that defines a method of producing an automaton corresponding to a condition being a conversion target.

The conversion table is constituted by a column 502 which describes conditions being the conversion target and a column 503 which defines a method of producing the corresponding automaton.

In S411, for example, for a literal "input character length < 100", the column 502 is searched, and a record 504 matches this literal.

As a result, an automaton as denoted by reference numeral 506 is produced.

Note that the portion expressed as N among the words of the condition 504 is 100 in this case.

If the literal is a negation of a certain atomic formula, it matches the condition 505. Thus, an automaton corresponding to this atomic formula is produced, and thereafter the accepting state and non-accepting state of this automaton is reversed.

Then, in S412, a procedure "INTERSECT" is called using the grammar X and the automaton R as arguments.

"INTERSECT" is a process for producing a grammar that a character string to be accepted by both the grammar X and the automaton R satisfies. As an algorithm of INTERSECT, for example, a method indicated in Reference Literature 2 is applicable.

### Reference Literature 2: D. Melski and T. Reps. Interconvertibility of Set Constraints and Context-Free Language Reachability. In Proceedings of the 1997 ACM SIGPLAN Symposium on Partial Evaluation and Semantics-based Program Manipulation, pages 74-89

When the loop is ended in S410, a grammar that takes INTERSECT with all literals in the nth conjunctive clause in C' is stored in the grammar X.

In S414, the attack data pattern extracting part 107 registers this grammar in the grammar G.

In registration, first, the attack data pattern extracting part 107 changes all non-terminal symbols in the grammar X to names that are different from the non-terminal symbols used in the grammar G, and adds all production rules to the grammar G.

After that, the attack data pattern extracting part 107 adds the start symbol of S :: = X, as the production rule of the start symbol S of the grammar G.

After that, the attack data pattern extracting part 107 returns to the outer loop S407, and carries out the same process for the next conjunctive clause.

By conducting the above processes, eventually, a grammar that represents all character strings capable of satisfying the constraint condition indicated by the constraint C is stored in the grammar G. Hence, in S416, the attack data pattern extracting part 107 outputs this grammar as the processing result.

An operation example of the pattern comparing part 108 will be explained.

As mentioned earlier, the pattern comparing part 108 compares the detection not-applicable data pattern calculated by the signature detection not-applicable data pattern extracting part 105 with the attack data pattern extracted by the attack data pattern extracting part 107.

Then, the pattern comparing part 108 calculates the pattern of attack data that cannot be detected using the detection pattern defined by the signature information 102.

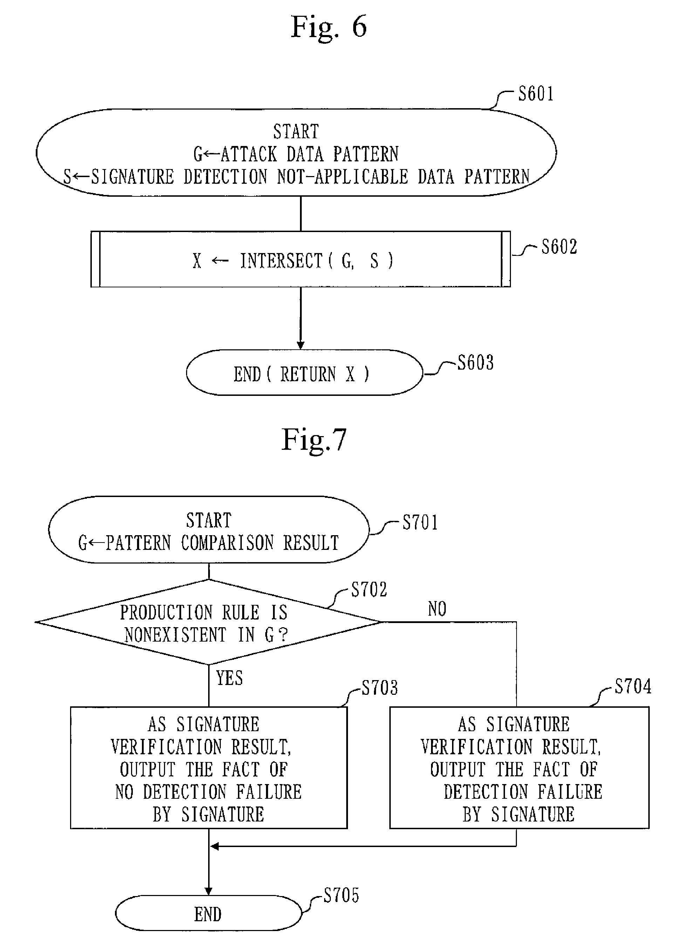

Fig. 6 is a flowchart illustrating an operation example of the pattern comparing part 108.

The pattern comparing part 108 is called upon input of the attack data pattern and the signature detection not-applicable data pattern, and store the attack data pattern and the signature detection not-applicable data pattern in variables G and S respectively (S601).

Then, in S602, a procedure "INTERSECT" is called using G and S as arguments.

As a result, the grammar of a character string which satisfies both the grammar G and the regular expression S, namely, the grammar satisfied by data which is attack data and not detectable using a signature is calculated.

The calculated grammar is substituted for the variable X, and is returned as the processing result of the pattern comparing part 108 (S603).

Finally, an operation example of the comparison result output part 109 will be explained.

As mentioned earlier, the comparison result output part 109 determines whether or not the pattern of the attack data calculated by the pattern comparing part 108 is empty, and outputs the result as the signature verification result 111.

Fig. 7 is a flowchart illustrating an operation example of the comparison result output part 109.

The comparison result output part 109 is called upon input of the grammar indicating the pattern comparison result outputted as the processing result of the pattern comparing part 108, and stores the grammar indicating the pattern comparison result in the variable G(S701).

Then, in S702, whether or not there is a production rule stored in the inputted grammar G is inspected.

If there is no production rule existent in the grammar G, it indicates that all attack data are detected using the signature. The comparison result output part 109 outputs, as the signature verification result 111, the fact that there is no detection failure by the signature, and and ends the process.

On the other hand, if there is any one production rule existent in the grammar G, an attack may be made by producing data conforming to this grammar, without being detected using the signature.

Thus, in S704, the comparison result output part 109 outputs the signature verification result 111 indicating that there is a detection failure by the signature, and ends the process.

As described above, at the minimum, information indicating whether there is a detection failure by the signature is outputted as the signature verification result 111. Other supplementary information may also be outputted.

For example, if it is determined that there is a detection failure by the signature, the contents of the grammar G may also be outputted. The user may actually produce data conforming to that grammar, and may test the IDS.

As described above, there is an effect that whether or not it is possible to detect a vulnerability attack being a detection target of the signature can be verified within a short period of time with no detection failure based on the signature information and the pattern information of the attack data, without actually operating the IDS.

Furthermore, there is an effect that by converting the constraint condition for the attack data produced from the difference between the program before vulnerability correction and the program after vulnerability correction, into the disjunctive canonical form, and producing the grammar that should be satisfied by the attack data, from each conjunctive clause, the pattern of the attack data which is necessary for signature verification can be produced automatically.

Furthermore, there is an effect that by calculating the pattern of data that cannot be detected using the signature from the pattern information of the signature, and comparing this pattern with the pattern of data that attacks the vulnerability, the signature and the attack data pattern can be compared automatically.

Furthermore, there is an effect that by employing the "INTERSECT" procedure in pattern comparison, if there is a detection failure by the signature, what attack data will actually pass through detection can be presented to the user.

Furthermore, there is an effect that by displaying the verification result by the comparison result output part, the user can easily recognize the verification result of the signature.

Furthermore, there is an effect that by downloading the signature information directly from the website of the IDS developer, verification is possible even if the verification device and the IDS are not directly connected to each other.

Furthermore, there is an effect that by downloading the program from the Internet regularly, the before-correction program 110 and the after-correction program 106 can be used without requiring a task on the user side.

This embodiment has described a signature verification device which outputs a signature verification result for signature information, and is constituted by the following elements:
a signature input part which fetches the signature information into the device and extracts the pattern definition information of data to be detected;
a signature detection not-applicable data pattern extracting part which produces a pattern that matches all data not detected using the signature;
an attack data pattern extracting part which produces the pattern of attack data that can attack vulnerability;
a pattern comparing part which compares the signature detection not-applicable data pattern with the attack data pattern, thereby calculating the pattern of attack data that cannot be detected using the signature; and
a comparison result output part which outputs the pattern of the attack data calculated by the pattern comparing part.

Also, this embodiment has described that the attack data pattern extracting part converts the constraint condition for the attack data produced from the difference between the program before its vulnerability is corrected and the program after its vulnerability is corrected, into the disjunctive canonical form, and produces a grammar that should be satisfied by the attack data, from each conjunctive clause.

Also, this embodiment has described that the signature detection not-applicable data pattern extracting part produces an automaton based on the pattern information of the signature, and reverses the accepting state and non-accepting state of the automaton, thereby calculating the pattern of the data that cannot be detected using the signature.

Also, this embodiment has described that the pattern comparing part takes an intersection (INTERSECT) of the signature detection not-applicable data pattern and the pattern of the data that attacks the vulnerability, thereby comparing the signature and the attack data pattern.

Also, this embodiment has described that, if there is a detection failure by the signature, the comparison result output part presents to the user what attack data will actually pass through detection.

Also, this embodiment has described that the signature input part directly downloads the signature information from the website of the IDS developer.

Also, this embodiment has described that the attack data pattern extracting part downloads the program from the Internet regularly.

### Embodiment 2.

In Embodiment 1 described above, the comparison result output part 109 directly outputs the result of the pattern comparing part 108. An embodiment will be described that deals with a case where the attack data pattern extracting part 107 extracts a pattern including also data that does not constitute an attack.

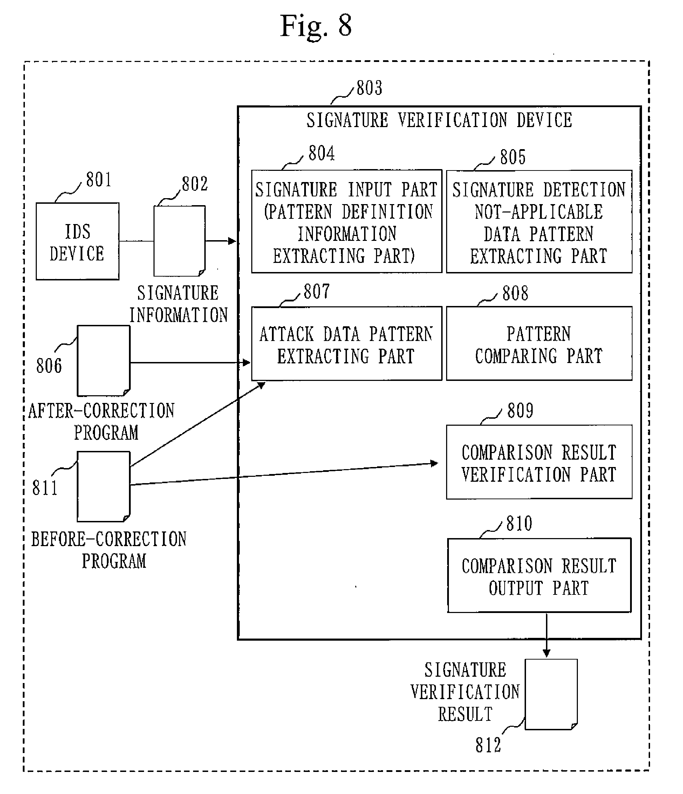

Fig. 8 illustrates a configuration example of this embodiment.

In the same manner as in Embodiment 1, a signature verification device 803 according to this embodiment takes as input, signature information 802 acquired from an IDS device 801 and programs (before-correction program 811 and after-correction program 806) before and after vulnerability, being the target of an attack that the signature information 802 is to detect, is corrected, and outputs a signature verification result 812.

Unlike Embodiment 1, the constituent elements of the signature verification device 803 additionally include a comparison result verification part 809.

Other elements (signature input part 804, signature detection not-applicable data pattern extracting part 805, attack data pattern extracting part 807, pattern comparing part 808, and comparison result output part 810) are the same as their counterparts in Embodiment 1.

The comparison result verification part 809 actually produces attack data (pattern match data) based on grammar information on attack data which is calculated by the pattern comparing part 808 and not detected by the signature information 802, and inputs the produced attack data to the before-correction program 811.

Then, the comparison result verification part 809 verifies whether the grammar information produced based on the pattern comparison result actually indicates the pattern of the data that constitutes an attack.

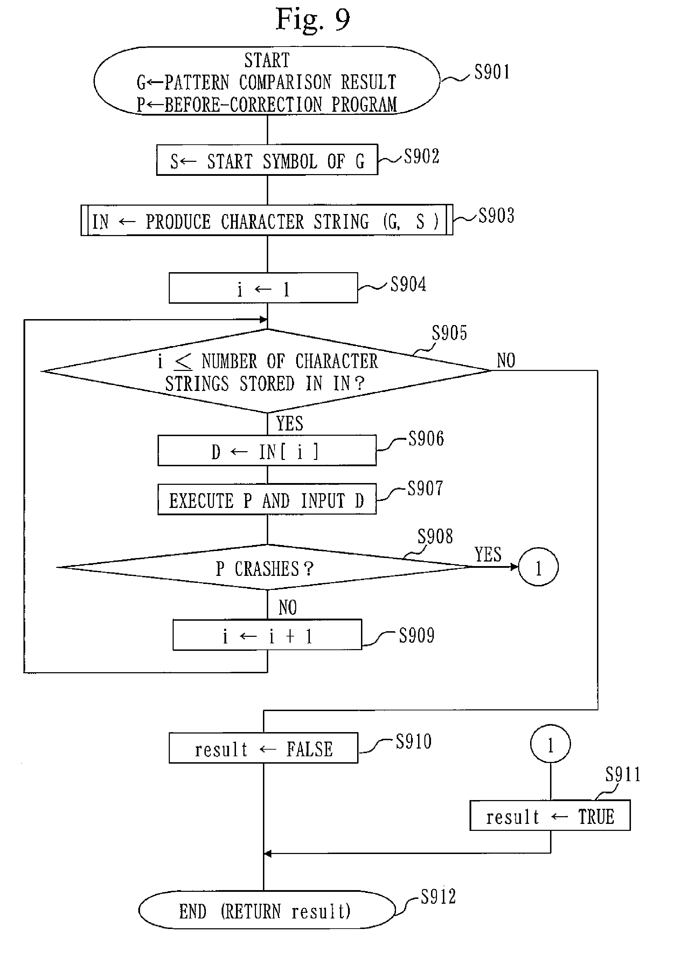

Fig. 9 is a flowchart illustrating an operation example of the comparison result verification part 809.

The comparison result verification part 809 is called upon input of the grammar calculated by the pattern comparing part 808, and the before-correction program 811 (S901).

Explanation will now be made by referring to the grammar and the before-correction program 811 as a grammar G and a before-correction program P, respectively.

The comparison result verification part 809 substitutes the start symbol of the grammar G for a variable S in S902, and then calls a procedure "character string production" using the grammar G and the variable S as arguments in S903.

In the grammar G, the procedure "character string production" produces all character strings that can be accepted as non-terminal symbols S, a specific processing procedure of which will be described later.

The execution result of the procedure "character string production" is stored in a variable IN as a character string list.

Then, in the loop of S905 through S909, the comparison result verification part 809 actually inputs the respective character strings stored in IN to the program P, and checks whether or not the character strings include a character string that forms attack data.

Whether or not a character string is attack data is determined in S908.

In S908, the comparison result verification part 809 monitors the behavior of the program P to which data has been inputted, and inspects whether or not the program crashes (abnormal end) due to a memory access fault or the like.

Whether or not the program crashes can be determined easily by connecting a debugger to a target program and the debugger executing the target program.

If the before-correction program P crashes, the comparison result verification part 809 considers that the inputted data is attack data, stores TRUE in a variable "result" as the determination result, and ends the loop.

If P does not crash with any character string stored in IN, the comparison result verification part 809 stores FALSE in the variable "result" and ends the loop.

Finally, the comparison result verification part 809 outputs the contents of the variable "result" as the processing result of the comparison result verification part 809.

If the processing result of the comparison result verification part 809 is TRUE, the comparison result output part 810 is called upon input of the grammar G.

If the processing result of the comparison result verification part 809 is FALSE, all production rules stored in the grammar G are deleted, and after that the comparison result output part 810 is called.

The operation of the procedure "character string production" will be described.

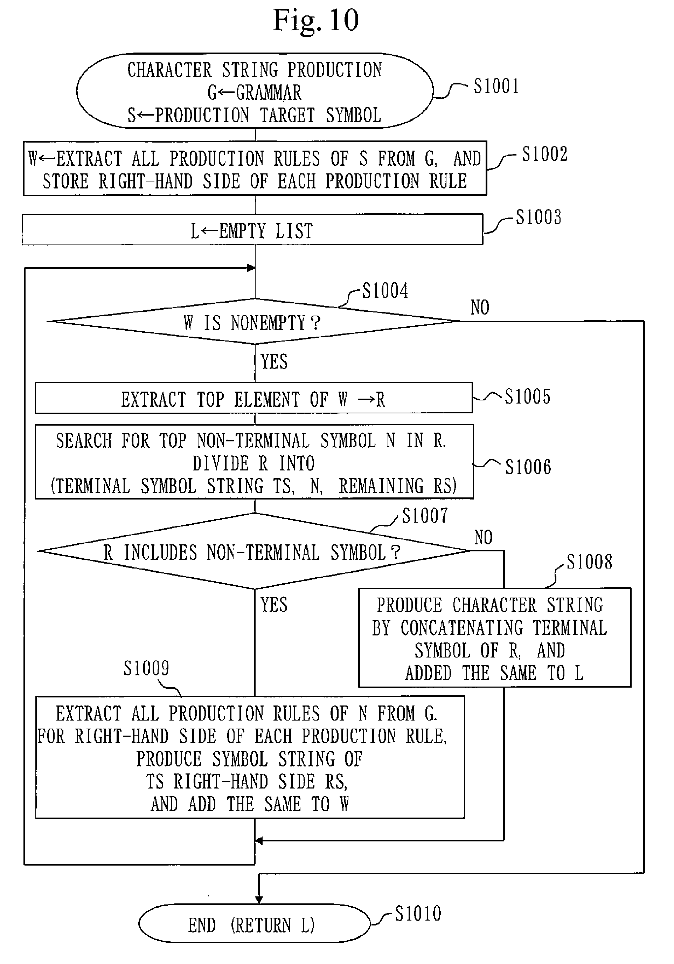

Fig. 10 is a flowchart illustrating the operation of the procedure "character string production".

In the procedure "character string production", a non-terminal symbol S as an object of character string production, and the grammar G are called as arguments (S1001).

First, in S 1002, a work list W is produced, and symbol strings on the right-hand sides of all production rules concerning the non-terminal symbol S defined in the grammar G are stored in the work list W.

For example, if two production rules : S :: = XY and S :: = BC exist in the grammar G, two right-hand side values (X, Y) and (B, C) are stored in the work list W.

Then, a list L which stores generated character strings is produced (S1003).

After that, the loop of S1004 through S1009 is repeated until the work list W becomes empty.

First, in S1005, an element at the top of the work list W is extracted, and the extracted top element is stored in a variable R.

In this case, the top element of the work list W is removed.

Then, non-terminal symbols are searched for from the top of the variable R. Using as the boundary a non-terminal symbol N which is first discovered, the variable R is divided into a terminal symbol string TS, N, and a remaining symbol string RS (S1006).

In S1007, the search result of the non-terminal symbols in S1006 is evaluated. If no non-terminal symbol N is discovered, all symbol strings in the variable R are terminal symbols. Thus, characters represented by the symbols are concatenated to produce a character string. The produced character string is added to the list L.

If a non-terminal symbol N is discovered in S1006, all production rules concerning the non-terminal symbol N are extracted from the grammar G. Using the symbol strings (assumed as NS) in the right-hand sides of the production rules, a symbol string TS NS RS is produced. The produced symbol string is added to the work list W (S1009).

S1008 or S1009 is practiced, and after that the process returns to S1004 at the top of the loop.

Finally, when the work list W becomes empty, the list L is outputted as the processing result of the procedure "character string production" (S1010).

According to this embodiment, in the procedure of character string production, all character strings that satisfy a given non-terminal symbol are outputted. It is also possible to limit the upper limit number of character strings to be produced. Also, it is easy to allow the user to designate the upper limit number of the character strings to be produced.

Also, in this embodiment, program crash is employed as a condition that determines whether an attack has been accomplished or not, as indicated in S908. Other than the method indicated in this embodiment, crash detecting methods as follows are available, of which any one can be employed.

After a target program is executed, an application execution error record on the OS (Operating System) is checked.

The user checks the operating screen of the target program and enters into the signature verification device whether or not the program crashes.

As described above, according to this embodiment, the attack data is produced based on the grammar information outputted by the pattern comparing part. The attack data is actually inputted to the before-correction program, and the operation of the before-correction program is monitored. Of the attack data patterns produced by the attack data pattern extracting part, a harmless pattern is excluded.

Thus, this embodiment has an effect that a verification result alarming a slip of detection with the signature is not outputted for the harmless pattern.

Furthermore, there is an effect that by restricting the upper limit number in the procedure of character string production, verification is not practiced endlessly.

Furthermore, there is an effect that by enabling the user to designate the upper limit number of character strings to be produced, the process time can be adjusted based on the judgment of the user.

Furthermore, there is an effect that by performing a crash determination of checking the application execution error record on the OS, verification can be performed even for a program that may operate differently when connected to a debugger.

Furthermore, there is an effect that by performing a crash determination in which the user checks the operation screen or the like and enters the checking result to the signature verification device, this verification device can be implemented even when the OS does not have a debugging function or an application execution error recording function.

This embodiment has described that the signature verification device described in Embodiment 1 is further provided with a comparison result verification part.

Also, this embodiment has descried that the user can designate the upper limit number of the attack data to be produced.

Also, this embodiment has descried that by checking, with the comparison result verification part, the application execution error record on the OS, a program crash can be determined.

Also, this embodiment has described that the comparison result verification part is provided with an interface with which the user checks the operation screen or the like of the target program and enters the determination result as to whether or not a crash occurs.

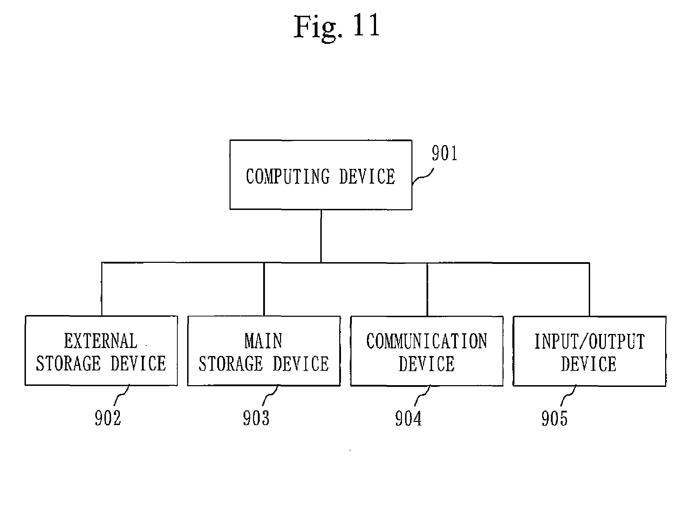

Finally, a hardware configuration example of the signature verification device 103 and the signature verification device 803 described in Embodiments 1 and 2 will be explained with reference to Fig. 11.

The signature verification device 103 and the signature verification device 803 are respectively computers, and the respective elements of the signature verification device 103 and signature verification device 803 can be implemented by programs.

As the hardware configuration of the signature verification device 103 and the signature verification device 803, a computing device 901, an external storage device 902, a main storage device 903, a communication device 904, and an input/output device 905 are connected to a bus.

The computing device 901 is a CPU (Central Processing Unit) which executes the programs.

The external storage device 902 is, for example, a ROM (Read Only Memory), a flash memory, or a hard disk device.

The main storage device 903 is a RAM (Random Access Memory).

The communication device 904 is used when, for example, the signature input part 104 receives the signature information 102 from the IDS device 101 (when the signature input part 804 receives the signature information 802 from the IDS device 801).

The input/output device 905 is, for example, a mouse, a keyboard, or a display device, and is used to input the before-correction program 110 and the after-correction program 106, input the before-correction program 811 and the after-correction program 806, output the signature verification result 111, and output the signature verification result 812.

The programs are usually stored in the external storage device 902. The programs as loaded in the main storage device 903 are sequentially read and executed by the computing device 901.

The programs are those which each implement a function of "part" illustrated in Fig 1 and Fig. 8.

Furthermore, the external storage device 902 also stores an OS. At least part of the OS is loaded in the main storage device 903. The computing device 901, while executing the OS, executes the programs each implement the function of "part" illustrated in Fig. 1 and Fig. 8.

The information, data, signal values, and variable values representing the result of the processes described in the explanations of Embodiments 1 and 2 as "to judge", "to determine", "to extract", "to detect", "to calculate", "to compare", "to verify", "to set", "to register", "to select", "to produce", "to input, "to output", and the like are stored, in the form of files, in the main storage device 903.

The signature information 102, the signature information 802, the before-correction program 110, the before-correction program 811, the after-correction program 106, and the after-correction program 806 are stored in the main storage device 903.

An encryption key, decryption key, random value, and parameter may be stored, in the form of files, in the main storage device 903.

The configuration of Fig. 11 merely presents an example of the hardware configuration of the signature verification device 103 and signature verification device 803. The hardware configuration of the signature verification device 103 and signature verification device 803 is not limited to the configuration indicated in Fig. 11, but can be another configuration.

The signature verification method according to the present invention can be implemented by the procedure described in Embodiments 1 and 2.

### Reference Signs List

101: IDS device; 102: signature information; 103: signature verification device; 104: signature input part; 105: signature detection not-applicable data pattern extracting part; 106: after-correction program; 107: attack data pattern extracting part; 108: pattern comparing part; 109: comparison result output part; 110: before-correction program; 111: signature verification result; 801: IDS device; 802: signature information; 803: signature verification device; 804: signature input part; 805: signature detection not-applicable data pattern extracting part; 806: after-correction program; 807: attack data pattern extracting part; 808: pattern comparing part; 809: comparison result verification part; 810: comparison result output part; 811: before-correction program; 812: signature verification result

## Claims

1. A signature verification device comprising:
a signature detection not-applicable data pattern extracting part that analyzes signature information and extracts a pattern of data which is not detected using the signature information;
an attack data pattern extracting part that analyzes a target program to which the signature information is to be applied, and extracts a pattern of attack data that attacks the target program; and
a pattern comparing part that compares a signature detection not-applicable data pattern extracted by the signature detection not-applicable data pattern extracting part with an attack data pattern extracted by the attack data pattern extracting part, and extracts an attack data pattern coinciding with the signature detection not-applicable data pattern, as an attack data pattern not detected using the signature information.

2. The signature verification device according to claim 1,
wherein the attack data pattern extracting part produces a constraint condition for the attack data based on a difference between a target program before vulnerability correction and a target program after vulnerability correction, and
converts the constraint condition produced, into a disjunctive canonical form, and extracts the pattern of the attack data from each conjunctive clause of the constraint condition that has been converted into the disjunctive canonical form.

3. The signature verification device according to claim 1 or 2, further comprising
a pattern definition information extracting part that extracts pattern definition information which defines a pattern of data being a detection target of the signature information, from the signature information,
wherein the signature detection not-applicable data pattern extracting part
produces an automaton representing the pattern defined by the pattern definition information, and
reverses an accepting state and a non-accepting state of the automaton produced, to extract the pattern of the data not detected using the signature information.

4. The signature verification device according to any one of claims 1 to 3,
wherein the pattern comparing part takes an intersection (INTERSECT) of the signature detection not-applicable data pattern and the attack data pattern, thereby comparing the signature detection not-applicable data pattern with the attack data pattern.

5. The signature verification device according to any one of claims 1 to 4, further comprising a comparison result output part that presents the attack data pattern extracted by the pattern comparing part to a user of the signature verification device.

6. The signature verification device according to claim 5, further comprising
a comparison result verification part that verifies whether or not an attack to the target program is caused by the attack data pattern extracted by the pattern comparing part,
wherein the comparison result output part selects an attack data pattern which is determined by the comparison result verification part to cause the attack to the target program, and presents the attack data pattern selected, to the user of the signature verification device.

7. The signature verification device according to claim 6,
wherein the comparison result verification part produces data that matches the attack data pattern extracted by the pattern comparing part, as pattern match data, and applies the pattern match data produced, to the target program, and
verifies whether or not an attack to the target program is caused by the pattern match data.

8. The signature verification device according to claim 7,
wherein when the target program ends abnormally, the comparison result verification part determines that an attack to the target program is caused by the pattern match data.

9. The signature verification device according to claim 8,
wherein the comparison result verification part detects an abnormal end of the target program, based on at least one of monitoring of a behavior of the target program, recording in an OS (Operating System) which operates the target program, and designation by the user of the signature verification device.

10. The signature verification device according to any one of claims 7 to 9,
wherein the comparison result verification part produces pattern match data as many as a number designated by the user of the signature verification device, and applies the pattern match data produced, to the target program.

11. A signature verification method comprising:
analyzing by a computer, signature information, and extracting a pattern of data which is not detected using the signature information, as a signature detection not-applicable data pattern;
analyzing by the computer, a target program to which the signature information is to be applied, and extracting a pattern of attack data that attacks the target program, as an attack data pattern; and
comparing by the computer, the signature detection not-applicable data pattern with the attack data pattern, and extracting an attack data pattern coinciding with the signature detection not-applicable data pattern, as an attack data pattern not detected using the signature information.

12. A program that causes a computer to serve as the signature verification device according to claim 1.
